# NEW EUROPEAN PATENT SPECIFICATION

(11) **EP 1 542 541 B2**
(45) Date of publication and mention of the opposition decision: **07.09.2016**
(45) Mention of the grant of the patent: 10.09.2008
(21) Application number: 02779227.4
(22) Date of filing: 24.09.2002
(51) Int. Cl.: A23G 4/00

(54) **LOW MOISTURE CHEWING GUM**
KAUGUMMI MIT NIEDRIGEM FEUCHTIGKEITSGEHALT
CHEWING GUM A FAIBLE TENEUR EN EAU

(43) Date of publication of application: 22.06.2005
(60) Divisional application: 08015350.5
(73) Proprietor: Gumlink A/S, 7100 Vejle (DK)
(72) Inventor: ANDERSEN, Lone, DK-5500 Middelfart (DK); WITTORF, Helle, DK-7120 Vejle O (DK)
(74) Representative: Hoffmann Eitle
(86) International application number: PCT/DK2002/000624
(87) International publication number: WO 2004/028265

(56) References cited:
- EP-A- 0 711 506
- EP-A1- 0 196 640
- WO-A1-01//47368
- WO-A1-84//01693
- JP-A- H 099 957
- US- - 4 579 738
- US-A- 3 800 006
- US-A- 4 254 149
- US-A- 4 514 422
- US-A- 5 437 875
- US-A- 5 633 342
- US-A- 5 800 848

## Description

### Field of the invention

The present invention relates to a chewing gum comprising at least one biodegradable chewing gum polymer.

### Background of the invention

A problem of the above described prior art biodegradable chewing gum is that the chewing gum formulations applied typically degrades prior to the chewing of the chewing gum.

It is the object of the invention to obtain a chewing gum in which the degradation of the biodegradable polymer or polymers are minimized prior to the chewing of the chewing gum.

### Summary of the invention

According to the invention, it has been realized that even relatively small amounts of water in the chewing gum containing biodegradable polymers affects the degradation of the chewing gum even before chewing has occurred.

Therefore, a small amount of water or moisture within the chewing gum is highly desired.

Moisture in chewing gum is typically provided by different water containing chewing gum ingredients such as sweeteners. One type of sweetener is carbohydrate syrups, such as conventional corn syrups or sugar alcohol syrups (including sorbitol solutions and hydrogenated starch hydrolysate solutions) typically added to chewing gum compositions to improve binding and softness characteristics in the gum.

A problem of a low moisture chewing gum is however generally, that a lower water content results in a less attractive texture of the chewing gum Therefore, additional softeners typically needs to be added.

This is however a problem, when dealing with biodegradable chewing gum due to the fact that chewing gum made on the basis of biodegradable polymer has turned out to be more vulnerable to softeners than chewing gum made on the basis of conventional polymers.

Surprisingly, it has been realized that chewing gum made on the basis of biodegradable polymers, most probably due to the hydrophilic nature of typical biodegradable polymers, exhibits a significantly faster gaining of softness during the initial chew compared to chewing gum made on the basis of conventional hydrophobic polymers.

According to several experiments under different conditions, a chewing gum made on the basis of biodegradable polymers actually having an initial stiffness (the very first chew) greaterthan conventional chewing gum, actually increases in softness much faster than conventional chewing gum, thereby reaching the initial acceptable texture before the conventional chewing gum. It has moreover been realized that this phenomena is also present when almost no moisture is present in the chewing gum as from the beginning.

According to the invention, a biodegradable chewing gum having low moisture has been provided; this chewing gum is defined in claim 1. According to the invention, low moisture content has been obtained in combination with an initial acceptable texture.

The chewing gum contains less than 10 weight percent water of the chewing gum.

According to an embodiment of the inventions, degradability tests have revealed that an acceptable chewing gum product having a certain stability with respect to degradation may be obtained when applying for moisture content as high as approximately 1.0 weight percent of water.

The chewing gum contains less than 1.0 weight percent water of the chewing gum.

In an embodiment of the invention the chewing gum contains less than 0.75 weight percent water of the chewing gum.

In an embodiment of the invention the chewing gum contains less than 0.2 weight percent water of the chewing gum.

In an embodiment of the invention the chewing gum is substantially free of water containing sweeteners or softeners.

In an embodiment of the invention the chewing gum contains at least one low hygroscopic softener or sweetener.

In an embodiment of the invention the chewing gum contains at least one low hygroscopic softeners or chewing gum comprises powdered erythritol.

Aqueous syrups, such as corn syrup and hydrogenated corn syrup may be used, particularly if their moisture content is reduced. This can preferably be done by coevaporating the aqueous syrup with a plasticizer, such as glycerin or propylene glycol, to a moisture content of less than 10%. Preferred compositions include hydrogenated starch hydrolyzate solids and glycerin. Such syrups and their methods of preparation are discussed in detail in U.S. Pat. No. 4,671,967, incorporated herein by reference.

In an embodiment of the invention the at least one biodegradable polymer is a polyester polymer obtained by the polymerization of one or more cyclic esters by ring-opening and where at least one of the cyclic esters are selected from the groups of glycolides, lactides, lactones, cyclic carbonates or mixtures thereof.

In an embodiment of the invention the at least one biodegradable polymer is a polyester copolymer obtained by the polymerization of two or more cyclic esters by ring-opening and where at least one of the cyclic esters are selected from the groups of glycolides, lactides, lactones, cyclic carbonates or mixtures thereof.

In an embodiment of the invention the rheological properties of the degradable polymer is controlled by adjusting the functional number of initiator.

In an embodiment of the invention the lactone monomers are chosen from the group of ε-caprolactone, δ-valerolactone, γ-butyrolactone, and β-propiolactone. It also includes ε-caprolactones, δ-valerolactones,γ-butyrolactones, or β-propiolactones that have been substituted with one or more alkyl or aryl substituents at any non-carbonyl carbon atoms along the ring, including compounds in which two substituents are contained on the same carbon atom and mixtures thereof.

In an embodiment of the invention the carbonate monomer is selected from the group of trimethylene carbonate, 5-alkyl-1,3-dioxan-2-one, 5,5-dialkyl-1,3-dioxan-2-one, or 5-alkyl-5-allcyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

In an embodiment of the invention said chewing gum ingredients comprise flavoring agents.

In an embodiment of the invention said flavoring agents comprise natural and synthetic flavourings in the form of natural vegetable components, essential oils, essences, extracts, powders, including acids and other substances capable of affecting the taste profile.

In an embodiment of the invention said chewing gum comprises flavor in an amount of 0.01 to about 30 wt %, said percentage being based on the total weight of the chewing gum.

In an embodiment of the invention said chewing gum comprises flavor in an amount of 0.2 to about 4 wt %, said percentage being based on the total weight of the chewing gum.

In an embodiment of the invention said flavor comprises water soluble ingredients.

In an embodiment of the invention said water soluble flavor comprises acids.

According to the invention, a surprising initial release of acids has been obtained.

In an embodiment of the invention said flavor comprising water insoluble ingredients.

In an embodiment of the invention, said chewing gum ingredients comprising sweeteners.

In an embodiment of the invention said sweetener comprises bulk sweeteners.

In an embodiment of the invention the chewing gum comprises bulk sweeteners in an amount of about 5 to about 95% by weight of the chewing gum, more typically about 20 to about 80% by weight of the chewing gum.

In an embodiment of the invention the sweetener comprises high intensity sweeteners In an embodiment of the invention the high intensity sweeteners comprises sucralose, aspartame, salts of acesulfame, alitame, saccharin and its salts, cyclamic acid and its salts, glycyrrhizin, dihydrochalcones, thaumatin, monellin, sterioside, alone or in combination.

In an embodiment of the invention wherein the chewing gum comprises high intensity sweeteners in an amount of about 0 to about 1 % by weight of the chewing gum, more typically about 0.05 to about 0.5 % by weight of the chewing gum.

In an embodiment of the invention, the chewing gum comprises at least one softener.

In an embodiment of the invention, the at least one softener comprises tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids - such as stearic, palmitic, oleic and linoleic acids mixtures thereof.

In an embodiment of the invention the chewing gum comprises softeners in an amount of about 0 to about 18% by weight of the chewing gum, more typically about 0 to about 12 % by weight of the chewing gum.

In an embodiment of the invention, the chewing gum ingredients comprise active ingredients.

In an embodiment of the invention, said active ingredients are selected from the group of: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminium salts, Calcium salts, Ferro salts, Silver salts, Zinc-salte, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine or derivates and mixtures thereof.

In an embodiment of the invention, the chewing gum is substantially free of non-biodegradable polymers.

In an embodiment of the invention the at least two ore more cyclic esters are selected from the groups of glycolides, lactides, lactones, cyclic carbonates or mixtures thereof.

In an embodiment of the invention the lactone monomers are chosen from the group of ε-caprolactone, δ-valerolactone, γ-butyrolactone, and β-propiolactone. It also includes ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom.

In an embodiment of the invention the carbonate monomer is selected from the group of trimethylene carbonate, 5-alk-yl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

In an embodiment of the invention the cyclic ester polymers and their copolymers resulting from the polymerization of cyclic ester monomers include, but are not limited to : poly (L-lactide) ; poly (D-lactide) ; poly (D, L-lactide) ; poly (mesolactide) ; poly (glycolide) ; poly (trimethylenecarbonate) ; poly (epsilon-caprolactone) ; poly (L lactide-co-D, L-lactide) ; poly (L-lactide-co-meso-lactide) ; poly (L-lactide co-glycolide) ; poly (L-lactide-co-trimethylenecarbonate) ; poly (L-lactide co-epsilon-caprolactone) ; poly (D, L-lactide-co-meso-lactide) ; poly (D, L lactide-co-glycolide) ; poly (D, L-lactide-co-trimethylenecarbonate) ; poly (D, L-lactide-co-epsilon-caprolactone) ; poly (meso-lactide-co glycolide) ; poly (meso-lactide-co-trimethylenecarbonate) ; poly (meso lactide-co-epsilon-caprolactone) ; poly (glycolide-cotrimethylenecarbonate) ; poly (glycolide-co-epsilon-caprolactone).

In an embodiment of the invention the chewing gum comprises filler.

A chewing gum base formulation may, if desired, include one or more fillers/texturisers including as examples, magnesium and calcium carbonate, sodium sulphate, ground limestone, silicate compounds such as magnesium and aluminium silicate, kaolin and clay, aluminium oxide, silicium oxide, talc, titanium oxide, mono-, di- and tri-calcium phosphates, cellulose polymers, such as wood, and combinations thereof.

In an embodiment of the invention the chewing gum comprises filler in an amount of about 0 to about 50% by weight of the chewing gum, more typically about 10 to about 40 % by weight of the chewing gum.

In an embodiment of the invention the chewing gum comprises at least one coloring agent.

According to an embodiment of the invention, the chewing gum may comprise color agents and whiteners such as FD&C-type dyes and lakes, fruit and vegetable extracts, titanium dioxide and combinations thereof. Further useful chewing gum base components include antioxidants, e.g. butylated hydroxytoluene (BHT), butyl hydroxyanisol (BHA), propylgallate and tocopherols, and preservatives.

In an embodiment of the invention the chewing gum is coated with an outer coating.

In an embodiment of the invention the outer coating is a hard coating.

In an embodiment of the invention the hard coating is a coating selected from the group consisting of a sugar coating and a sugarless coating and a combination thereof.

In an embodiment of the invention the hard coating comprises 50 to 100% by weight of a polyol selected from the group consisting of sorbitol, maltitol, mannitol, xylitol, erythritol, lactitol and isomalt.

In an embodiment of the invention the outer coating is an edible film comprising at least one component selected from the group consisting of an edible film-forming agent and a wax.

In an embodiment of the invention the film-forming agent is selected from the group consisting of a cellulose derivative, a modified starch, a dextrin, gelatine, shellac, gum arabic, zein, a vegetable gum, a synthetic polymer and any combination thereof.

In an embodiment of the invention the outer coating comprises at least one additive component selected from the group consisting of a binding agent, a moisture absorbing component, a film forming agent, a dispersing agent, an antisticking component, a bulking agent, a flavouring agent, a colouring agent, a pharmaceutically or cosmetically active component, a lipid component, a wax component, a sugar, an acid and an agent capable of accelerating the after-chewing degradation of the degradable polymer.

In an embodiment of the invention the outer coating is a soft coating.

In an embodiment of the invention the soft coating comprises a sugar free coating agent.

In an embodiment of the invention the chewing gum comprises conventional chewing gum polymers or resins.

The at least one biodegradable polymer comprises at least 5% of the chewing gum polymers.

In an embodiment of the invention all the biodegradable polymers comprised in the chewing gum comprises at least 25%, preferably at least 50% of the chewing gum polymers.

In an embodiment of the invention the biodegradable polymers comprised in the chewing gum comprises at least 80%, preferably at least 90% of the chewing gum polymers.

In an embodiment of the invention the chewing gum comprises said at least one biodegradable polyester copolymer forming a plasticizer of the chewing gum and at least one non-biodegradable conventional elastomer

According to the invention, a biodegradable polymer according to the invention may form a substitute of a conventional natural or synthetic resin.

In an embodiment of the invention the chewing gum comprises the at least one biodegradable polyester copolymer forming an elastomer of the chewing gum and at least one non-biodegradable conventional natural or synthetic resin.

According to the invention, a biodegradable polymer according to the invention may form a substitute of a conventional low or high molecular weight elastomer.

In an embodiment of the invention said chewing gum comprises
at least one biodegradable elastomer in the amount of about 0.5 to about 70% wt of the chewing gum,
at least one biodegradable plasticizer in the amount of about 0.5 to about 70% wt of the chewing gum and
at least one chewing gum ingredient chosen from the groups of softeners, sweeteners, flavoring agents, active ingredients and fillers in the amount of about 2 to about 80% wt of the chewing gum.

In an embodiment of the invention edible polyesters may be applied as a degradable chewing gum polymer.

Edible polyesters are obtained by esterification of at least one alcohol and one acid.

The edible polyester is produced by condensation polymerization reaction of at least one alcohol chosen from the group of trihydroxyl alcohol and dihydroxyl alcohol, and at least one acid chosen from the group consisting of dicarboxylic acid and tricarboxylic acid.

It is possible to use edible or food grade materials. Because the starting acids and alcohols are food grade materials the resultant polymers is edible.
- Alcohols:: Glycerol, propylene glycol, 1,3 butylene diol
- Acids:: Citric acid, fumaric acid, adipic acid, malic acid, succinic acid, suberic acid, sebacic acid, dodecanedioic acid, glucaric acid, glutamic acid, glutaric, azelaic acid, tartaric acid

Edible polyesters can replace both elastomers and elastomer plasticizers and form 1-80% of the gum base.

### The drawing

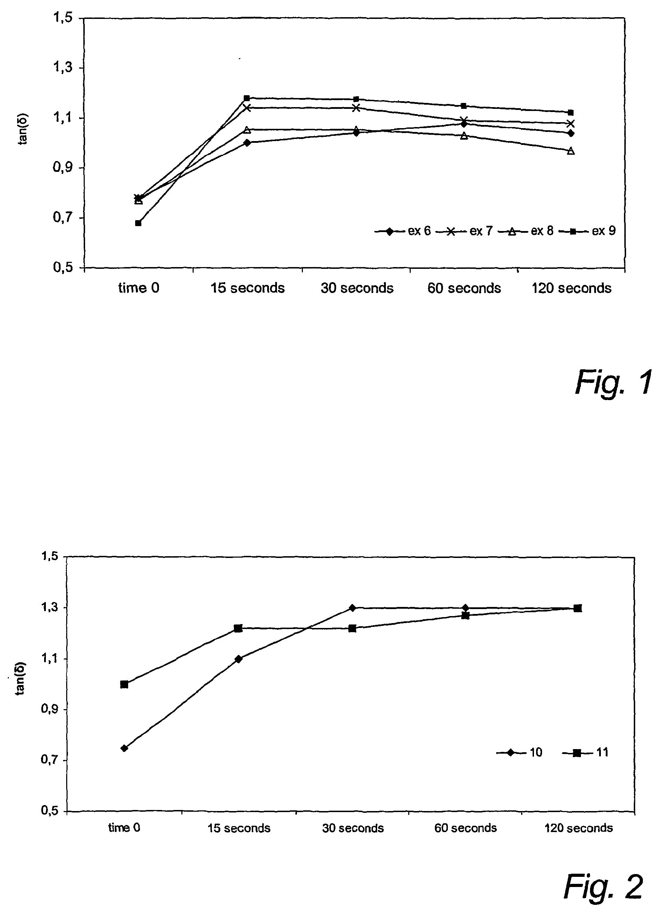

The invention will now be described with reference to the drawings of which fig. 1 and 2 illustrate the texture of chewing gum according to the inveniton.

### Detailed description

In the present context the terms environmentally or biologically degradable polymer compounds refers to chewing gum base components which, after dumping the chewing gum, is capable of undergoing a physical, chemical and/or biological degradation whereby the dumped chewing gum waste becomes more readily removable from the site of dumping or is eventually disintegrated to lumps or particles which are no longer recognisable as being chewing gum remnants. The degradation or disintegration of such degradable polymers can be effected or induced by physical factors such as temperature, light, moisture, by chemical factors such as hydrolysis caused by a change in pH or by the action of enzymes capable of degrading the polymers. In other useful embodiments all of the polymer components of the gum base are environmentally degradable or biodegradable polymers.

Preferably, the ultimate degradation products are carbon dioxide, methane and water.

According to a preferred definition of biodegradability according to the invention biodegradability is a property of certain organic molecules whereby, when exposed to the natural environment or placed within a living organism, they react through an enzymatic or microbial process, often in combination with a pure chemical process such as hydrolysis, to form simpler compounds, and ultimately, carbon dioxide, nitrogen oxides, and water.

Accordingly, suitable examples of additional environmentally or biologically degradable chewing gum base polymers which can be applied in accordance with the gum base of the present invention include degradable polyesters, polycarbonates, polyester am ides, polypeptides, homopolymers of amino acids such as polylysine, and proteins including derivatives hereof such as e.g. protein hydrolysates including a zein hydrolysate. Particularly useful compounds of this type include polyester polymers obtained by the polymerisation of one or more cyclic esters such as lactide, glycolide, trimethylene carbonate, δ-valerolactone, β-propiolactone and ε-caprolactone. Such degradable polymers may be homopolymers or copolymers, including block-polymers.

Unless otherwise indicated, as used herein, the term "molecular weight" means number average molecular weight (Mn).

### EXAMPLE 1

### Preparation of resin

A resin sample was produced using a cylindrical glass, jacketed 10 L pilot reactor equipped with glass stir shaft and Teflon stir blades and bottom outlet. Heating of the reactor contents was accomplished by circulation of silicone oil, thermostated to 130°C, through the outer jacket. D,L-lactide (4.877 kg, 33.84 mol) was charged to the reactor and melted by heating to 140 °C for 6 h. After the D,L-lactide was completely molten, the temperature was reduced to 130 °C, and stannous octoate (1.79 g, 4.42 x 10⁻³ mol), 1,2-propylene glycol (79.87 g, 1.050 mol), and ε-caprolactone (290.76 g, 2.547 mol) were charged to the reactor. After the mixture became homogeneous, stirring was continued for 24 h at 130°C. At the end of this time, the bottom outlet was opened, and molten polymer was allowed to drain into a Teflon-lined paint can.
Characterization of the product indicated Mₙ = 5,700 g/mol and M_{w} = 7,100 g/mol (gel permeation chromatography with online MALLS detector) and Tg = 30.7 °C (DSC, heating rate 10°C/min).

### EXAMPLE 2

### Preparation of LMWE elastomer

A LMWE sample was synthesized within a dry N₂ glove box, as follows. Into a 500 mL resin kettle equipped with overhead mechanical stirrer, 0.40 g 1,2-propane diol (1.82 mL of a 22.0 % (w/v) solution in MeCl₂), and 0.094 g Sn (Oct)₂ (2.2 mL of a 4.27 % (w/v) solution of in MeCl₂) were charged under dry N₂ gas purge. The MeCl₂ was allowed to evaporate under the N₂ purge for 15 min. Then ε-caprolactone (170 g,1.49 mol), TMC (76g, 0.74 mol), and 8-valerolactone (74 g, 0.74 mol) were added. The resin kettle was submerged in a 130°C constant-temperature oil bath and stirred for 14 h. Subsequently the kettle was removed from the oil bath and allowed to cool to room temperature.
Characterization of the product indicated Mₙ = 57,960 g/mol and M_{w} = 85,910 g/mol (gel permeation chromatography with online MALLS detector) and Tg = - 59.8°C (DSC, heating rate 10°C/min).

### EXAMPLE 3

### Preparation of HMWE

A HMWE sample was synthesized in a dry N₂ glove box, as follows. Into a 500 mL resin kettle equipped with overhead mechanical stirrer was charged 0.037 g Sn(Oct)₂ (2.4 ml of a 1.54% (w/v) solution in methylene chloride) under dry N₂ gas purge. The methylene chloride was allowed to evaporate under the N₂ purge for 15 min. Then, pentaerythritol (0.068 g, 4.99 x 10⁻⁴ mol), ε-caprolactone (68.0g, 0.596 mol), TMC (7.0 g, 0.069 mol), and 8-valerolactone (33.0 g, 0.33 mol) were added. The resin kettle was then submerged in a 130°C constant-temperature oil bath and stirred for about 2-2.5 h, atwhich time the mass solidified and could no longer be stirred. The reacting mass was then maintained at 130 °C for an additional 11.5 -12 h for a total reaction time of 14 h. Subsequently the kettle was removed from the oil bath and allowed to cool to room temperature..
Characterization of the product indicated Mₙ = 113,900 g/mol and M_{w} = 369,950 g/mol (gel permeation chromatography with online MALLS detector).

### EXAMPLE 4

### Preparation of gum bases

All the gum bases are prepared with following basic formulation:

| Ingredients | Percent by weight |
|---|---|
| Elastomer HMWE | 20 |
| Elastomer LMWE | 40 |
| Resin | 40 |

The gum bases are prepared as follows:

HMWE elastomer is added to a mixing kettle provided with mixing means like e.g. horizontally placed Z-shaped arms. The kettle had been preheated for 15 minutes to a temperature of about 60-80 °C. The rubber is broken into small pieces and softened with mechanical action on the kettle.
The resin is slowly added to the elastomer until the mixture becomes homogeneous. The remaining resin is then added to the kettle and mixed for 10-20 minutes. The LMWE elastomer is added and mixed for 20-40 minutes until the whole mixture becomes homogeneous.
The mixture is then discharged into the pan and allowed to cool to room temperature from the discharged temperature of 60-80 °C, or the gumbase mixture is used directly for chewing gum by adding all chewing gum components in an appropriate order under continuous mixing.

### EXAMPLE 5

### Preparation of Chewing gum

All chewing gum formulations are prepared with the following basic formulation

| Ingredients | Percent by weight (Mint formulation with maltitol syrup)^{*} | Percent by weight (Mint formulation without maltitol syrup) |
|---|---|---|
| Gum base | 40 | 40 |
| Sorbitol | 48.6 | 51,6 |
| Maltitol syrup | 3 | - |
| Peppermint oil | 1.5 | 5 |
| Menthol crystals | 0.5 | 0.5 |
| Strawberry | - | - |
| Aspartame | 0.2 | 0.2 |
| Acesulfame | 0.2 | 0.2 |
| Xylitol | 6 | 6 |
| | | |
| Approx. amount | | |
| of water: | 1.5% | 0.5% |

| | | |
|---|---|---|
| *: Reference Example | | |

The water is primary added via the maltitol syrup, but also contributions from the bulk sweetener are present.

The chewing gum products are prepared as follows:

The gum base is added to a mixing kettle provided with mixing means like e.g. horizontally placed Z-shaped arms. The kettle had been preheated for 15 minutes to temperatures of about 60-80 °C. Or the mixing step is continued directly from the gum base preparation i.e. in a one step operation. The mixing process is preformed at a temperatures between 60-80 °C.

One third portion of the sorbitol is added together with the gum base and mixed for 1-2 minutes. Another one third portion of the sorbitol and lycasin are then added to the kettle and mixed for 2 minutes. The remaining one third portion of sorbitol, peppermint and menthol are added and mixed for 2 minutes.Then aspartame and acesulfame are added to the kettle and mixed for 3 minutes. Xylitol is added and mixed for 3 minutes. The resulting gum mixture is then discharged and e.g. transferred to a pan at temperature of 40-48 °C. The gum is then rolled and scored into cores, sticks, balls, cubes, and nay other desired shape, optionally followed by coating and polishing processes prior to packaging.

### EXAMPLE 6-9

### Rheological texture profile of conventional and biodegradable chewing gum containing flavor.

| Ex | Gum base | Polymer 1 | Polymer 2 | Polymer 3 | Chewing gum |
|---|---|---|---|---|---|
| 6* | Standard conventional gum base | Butyl rubber Mn =117.000 | PIB Mn =30.000 | PVA Mn =5000 | Mint |
| 7* | Gum base based only on example 2 | Butyl rubber Mn =117.000 | Elastomer according to example 2 | PVA Mn =5000 | Mint |
| 8* | Gum base based only on example 1 | Butyl rubber Mn =117.000 | Polyisobutylen e Mn =30.000 | Polymer according to example 1 | Mint |
| 9* | Gum base based only on example 1-2 | Butyl rubber Mn =117.000 | Elastomer according to example 2 | Polymer according to example 1 | Mint |

| | | | | | |
|---|---|---|---|---|---|
| *: Reference Example | | | | | |

Mint refers to the chewing gum formulation of example 5 with maltitol syrup.

Figure 1 illustrates rheological chewing profiles of the chewing gum corresponding to example 6-9.The gum centres were chewed in a chewing machine (CF Jansson). The chewing frequency was set to 1 Hz, a pH buffer was used as saliva and the temperature was set at 37 °C. The chewing time was set to 15 sec, 30 sec, 60 sec and 120 sec. After chewing, the chewed cud was measured on a rheometer, type AR1000 from TA Instruments in a frequency scan. The results from these measurements can be seen on Fig 1 and 2 wherein the storage modulus (G') and tan(δ) versus chewing time is depicted illustrating the texture changes during chewing.

From figure 1 it can be seen that the biodegradable chewing gums ex. 7-9 are softening faster than the chewing gum ex. 6 being 100% conventional seen as an increased slope in tan δ i.e. a faster development of viscous flow. The figure also illustrates that ex. 9 containing 80% of biodegradable polymer is softening faster that the two other chewing gums containing only 40% biodegradable polymer.
This figure also states that textures of chewing gum containing biodegradable polymers are comparable to the texture of a conventional chewing gum.
In summery, the more biodegradable polymer in the chewing gum the faster it softens.

### EXAMPLE 10-11

### Rheological texture profile of conventional and biodegradable chewing gum with and without maltitol syrup in the formulation.

| Ex | Gum base | Polymer 1 | Polymer 2 | Polymer 3 | Chewing gum |
|---|---|---|---|---|---|
| 10 | 100 % biodegradable gum base | Elastomer according to example 3 | Elastomer according to example 2 | Polymer according to example 1 | Mint (without maltitol syrup) |
| 11* | 100 % biodegradable gum base | Elastomer according to example 3 | Elastomer according to example 2 | Polymer according to example 1 | Mint (with maltitol syrup) |

| | | | | | |
|---|---|---|---|---|---|
| *: Reference Example | | | | | |

Mint refers to the chewing gum formulation of example 5.

Figure 2 show the effect on texture when leaving the maltitol syrup out of the formulation as ex. 10 being without maltitol syrup is having a lower tan δ i.e. a higher stiffness. The texture of ex. 10 approaches ex. 11 fast reaching ex. 10 after approx. 20 seconds of chewing.
In summery, the loss of softness in the initial chew as seen in the chewing gum without maltitol syrup is fast compensated by the fast uptake of saliva in the chewing gum as a result of the hydrophilic nature of the biodegradable polymers used.

### EXAMPLE 12

### Hardness

The hardness of the two examples 10 and 11 were measured in order to determine instant hardness i.e. a measure of the chewing resistance in the first few chews in the chewing gums. The hardness of the test samples were tested by an compression load test using a TA-XT2i TEXTURE analyser from Stable Micro Systems with a 4 mm DIA CYLINDER STAINLESS at a speed of 0.4 mm/s using a test distance of 3.5 mm into the chewing gum body.
The test result (N) of this experiment is shown in the below Table 1

**Table 1: Hardness of biodegradable chewing gum with and without maltitol syrup-**

| Example | Hardness (N) | S.D |
|---|---|---|
| 10 | 49.29 | 1.46 |
| 11* | 33.27 | 0.69 |

| | | |
|---|---|---|
| *: Reference Example | | |

As can be seen from the above Table 1, the chewing gum samples containing maltitol syrup are softer than the chewing gum without the maltitol syrup in accordance with the result in example 10-11.

### EXAMPLE 13

### Degradation of biodegradable chewing gum with and without maltitol syrup in the formulation.

A panel evaluated the two samples over a period of 4 months every one month. The following rating was used:

**Table 2: Ratings**

| Rating | Description |
|---|---|
| 1 Very | poor |
| 2 | Poor |
| 3 | Acceptable |
| 4 | Good |
| 5 | Very good |

**Table 3: Evaluation of degradation**

| Time | Example 10 | | Example 11 | |
|---|---|---|---|---|
| | Texture | Taste | Texture | Taste |
| 0 month | 4 | 5 | 4 | 5 |
| 1 month | 4 | 5 | 4 | 5 |
| 2 month | 4 | 5 | 3 | 4 |
| 3 month | 4 | 4 | 3 | 3 |
| 4 month | 4 | 4 | 1-2 | 2 |

Experiments by evaluating the texture and the taste as a function of time have shown that the ex. 10 - without maltitol syrup - has significant improved taste and texture. Hence, it is thereby indicated that low water content in the chewing gum formulations improves the biodegradable chewing gum resulting in a prolonged shelf life.
The degradation rate according to example 11 is regarded as acceptable for certain purposes.

## Claims

1. Chewing gum comprising at least one biodegradable polymer and chewing gum ingredients,
said chewing gum ingredients being chosen from the groups of softeners, sweeteners, flavoring agents, active ingredients, fillers, mixtures thereof and
said chewing gum containing less than 1.0 weight percent water of the chewing gum,
wherein the at least one biogradable polymer comprises at least 5% of the chewing gum polymers.

2. Chewing gum according to claim any of the claim 1, wherein said chewing gum containing less than 0.75 weight percent water of the chewing gum 2

3. Chewing gum according to claim any of the claims 1-2, wherein said chewing gum containing less than 0,2 weight percent water of the chewing gum

4. Chewing gum according to claim any of the claims 1-3,
wherein the at least one biodegradable polymer is a polyester polymer obtained by the polymerization of one or more cyclic esters by ring-opening and where at least one of the cyclic esters are selected from the groups of glycolides, lactides, lactones, cyclic carbonates or mixtures thereof.

5. Chewing gum according to claim any of the claims 1-4,
wherein the at least one biodegradable polymer is a polyester copolymer obtained by the polymerization of two or more cyclic esters by ring-opening and where at least one of the cyclic esters are selected from the groups of glycolides, lactides, lactones, cyclic carbonates or mixtures thereof.

6. Chewing gum according to claim any of the claims 1-5,
wherein the rheological properties of the degradable polymer is controlled by adjusting the functional number of initiator.

7. Chewing gum according to claim any of the claims 1-6,
wherein the lactone monomers are chosen from the group of ε-caprolactone, δ-valerolactone, γ-butyrolactone, and β-propiolactone. It also includes ε-caprolactones, δ-valerolactones, γ-butyrolactones, or β-propiolactones that have been substituted with one or more alkyl oraryl substituents at any non-carbonyl carbon atoms along the ring, including compounds in which two substituents are contained on the same carbon atom and mixtures thereof.

8. Chewing gum according to claim any of the claims 1-7,
wherein the carbonate monomer is selected from the group of trimethylene carbonate, 5-alkyl-1,3-dioxan-2-one, 5,5-dialkyl-1,3-dioxan-2-one, or 5-alkyl-5-allryloaycarbonyl-1,3-dioxan 2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

9. Chewing gum according to claim any of the claims 1-8,
wherein the chewing gum is substantially free of water containing sweeteners or softeners.

10. Chewing gum according to claim any of the claims 1-9,
wherein the chewing gum comprises at least one low hygroscopic softener or sweetener.

11. Chewing gum according to claim any of the claims 1-10,
wherein the at least one low hygroscopic softeners or chewing gum comprises powdered erithritol.

12. Chewing gum according to any of claims 1-11, wherein
said chewing gum ingredients comprise flavoring agents.

13. Chewing gum according to any of claims 1-12, wherein
said flavoring agents comprises natural and synthetic flavorings in the form of natural vegetable components, essential oils, essences, extracts, powders, including acids and other substances capable of affecting the taste profile.

14. Chewing gum according to any of claims 1-13. wherein
said chewing gum comprises flavor in an amount of 0.01 to about 30 wt %, said percentage being based on the total weight of the chewing gum.

15. Chewing gum according to any of claims 1-14, wherein
said chewing gum comprises flavor in an amount of 0.2 to about 4 wt %, said percentage being based on the total weight of the chewing gum.

16. Chewing gum according to any of claims 1-15, wherein
said flavor comprises water soluble ingredients.

17. Chewing gum according to any of claims 1-16, wherein said water soluble flavor comprises acids,

18. Chewing gum according to any of claims 1-17, wherein said flavor comprises water insoluble ingredients.

19. Chewing gum according to any of claims 1-18, wherein said chewing gum ingredients comprising sweeteners.

20. Chewing gum according to any of claims 1-19,
wherein said sweetener comprises bulk sweeteners.

21. Chewing gum according to any of claims 1-20,
wherein the chewing gum comprises bulk sweeteners in the amount of about 5 to about 95% by weight of the chewing gum, more typically about 20 to about 80% by weight of the chewing gum.

22. Chewing gum according to any of claims 1-21, wherein said sweetener comprises high intensity sweeteners

23. Chewing gum according to any of claims 1-22, wherein the high intensity sweeteners comprises sucralose, aspartame, salts of acesulfame, alitame, saccharin
and its salts, cyclamic acid and its salts, glycyrrhizin, dihydrochalcones, thaumatin, monellin, sterioside, alone or in combination.

24. Chewing gum according to any of claims 1-23,
wherein the chewing gum comprises high intensity sweeteners in an amount of about 0 to about 1 % by weight of the chewing gum, more typically about 0.05 to about 0.5 % by weight of the chewing gum.

25. Chewing gum according to any of claims 1-24,
wherein the chewing gum comprises at least one softener.

26. Chewing gum according to any of claims 1-25,
wherein the at least one softener comprises tallow, hydrogenated tallow, hydrogenated and partially hydrogenated vegetable oils, cocoa butter, glycerol monostearate, glycerol triacetate, lecithin, mono-, di-and triglycerides, acetylated monoglycerides, fatty acids - such as stearic, palmitic, oleic and linoleic acids, waxes, PGE and mixtures thereof.

27. Chewing gum according to any of claims 1-26,
wherein the chewing gum comprises softeners in the amount of about 0 to about 18% by weight of the chewing gum, more typically about 0 to about 12 % by weight of the chewing gum.

28. Chewing gum according to any of claims 1-27, wherein said chewing gum ingredients comprise active ingredients.

29. Chewing gum according to any of claims 1-28, said active ingredients being selected from the group of: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfitam, Bupropion, Nicotine, Azithromycin, Clarithromycin, Clotrimazole. Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin; Methyldopa, Methylphenidate, Benzalcon. Chloride, Benzeth, Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidinie, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan Rizatriptan, Sumatriptan, Zolmitriptan, Aluminium salts, Calcium salts, Ferro salts, Silver salts, Zinc-salte, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and/or Ratinidine or derivates and mixtures thereof.

30. Chewing gum according to any of claims 1-29, wherein the chewing gum is substantially free of non-biodegradable polymers.

31. Chewing gum according to any of claims 1-30, wherein the at least two or more cyclic esters are selected from the groups of glycolides, lactides, lactones, cyclic carbonates or mixtures thereof.

32. Chewing gum according to any of claims 1-31, wherein lactone monomers are chosen from the group of s-caprolactone, δ-valerolactone, γ-butyrolactone, and β-propiolactone. It also includes ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom.

33. Chewing gum according to any of claims 1-32,
wherein the carbonate monomer is selected from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

34. Chewing gum according to any of claims 1-33,
wherein cyclic ester polymers and their copolymers resulting from the polymerization of cyclic ester monomers include, but are not limited to: poly (L-lactide) ; poly (D-lactide) ; poly (D, L-lactide) ; poly (mesolactide) ; poly (glycolide) ; poly (trimethylenecarbonate) ; poly (epsilon-caprolactone) ; poly (L-lactide-co-D, L-lactide) : poly (L-lactide-co-meso-lactide); poly (L-lactide co-glycolide) ; poly (L-lactide-co-trimethylenecarbonate) ; poly (L-lactide co-epsilon-caprolactone) ; poly (D, L-lactide-co-meso-lactide) ; poly (D, L lactide-co-glycolide) ; poly (D, L-lactideco-trimethylenecarbonate) ; poly (D, L-lactide-co-epsilon-caprolactone) ; poly (meso-lactide-co glycolide) ; poly (meso-lactide-co-trimethylenecarbonate) ; poly (meso lactide-co-epsilon-caprolactone) ; poly (glycolide-cotrimethylenecarbonate) poly (glycolide-co-epsilon-caprolactone).

35. Chewing gum according to any of claims 1-34,
wherein the chewing gum comprises filler.

36. Chewing gum according to any of claims 1-35,
wherein the chewing gum comprises filler in an amount of about 0 to about 50% by weight of the chewing gum, more typically about 10 to about 40 % by weight of the chewing gum.

37. Chewing gum according to any of claims 1-36,
wherein the chewing gum comprises at least one coloring agent.

38. Chewing gum according to any of claims 1-37, where the chewing gum is coated with an outer coating.

39. Chewing gum according to any of claims 1-38, wherein the outer coating is a hard coating.

40. Chewing gum according to any of claims 1-39, wherein the hard coating is a coating selected from the group consisting of a sugar coating and a sugarless coating and a combination thereof.

41. Chewing gum according to any of claims 1-40, wherein the hard coating comprises 50 to 100% by weight of a polyol selected from the group consisting of sorbitol, maltitol, mannitol, xylitol, erythritol, lactitol and isomalt.

42. Chewing gum according to any of claims 1-41, wherein the outer coating is an edible film comprising at least one component selected from the group consisting of an edible film-forming agent and a wax.

43. Chewing gum according to any of claims 1-42, wherein the film-fonning agent is selected from the group consisting of a cellulose derivative, a modified starch, a dextrin, gelatine, shellac, gum arabic, zein, a vegetable gum, a synthetic polymer and any combination thereof.

44. Chewing gum according to any of claims 1-43, wherein the outer coating comprises at least one additive component selected from the group consisting of a binding agent, a moisture absorbing component, a film forming agent, a dispersing agent, an antisticking component, a bulking agent, a flavouring agent, a colouring agent, a pharmaceutically or cosmetically active component, a lipid component, a wax component, a sugar, an acid and an agent capable of accelerating the after-chewing degradation of the degradable polymer.

45. Chewing gum according to any of claims 1-44, wherein the outer coating is a soft coating.

46. Chewing gum according to any of claims 1-45, wherein the soft coating comprises a sugar free coating agent.

47. Chewing gum according to any of claims 1-46,
wherein said chewing gum comprises conventional chewing gum polymers or resins.

48. Chewing gum according to any of claims 1-47,
wherein all the biodegradable polymers comprised in the chewing gum comprises at least 25%, preferably at least 50% of the chewing gum polymers.

49. Chewing gum according to any of claims 1-48,
wherein all the biodegradable polymers comprised in the chewing gum comprises at least 80%, preferably at least 90% of the chewing gum polymers.

50. Chewing gum according to any of claims 1-49,
wherein said chewing gum comprises
- said at least one biodegradable polyester copolymer forming a plasticizer of the chewing gum and
- at least one non-biodegradable conventional elastomer.

51. Chewing gum according to any of claims 1-50,
wherein said chewing gum comprises
- said at least one biodegradable polyester copolymer forming an elastomer of the chewing gum and
- at least one non-biodegradable conventional natural or synthetic resin.

52. Chewing gum according to any of the claims 1-51, wherein said chewing gum comprises
at least one biodegradable elastomer in the amount of about 0.5 to about 70% wt of the chewing gum,
at least one biodegradable plasticizer in the amount of about 0.5 to about 70% wt of the chewing gum and
at least one chewing gum ingredient chosen from the groups of softeners, sweeteners, flavoring agents, active ingredients and fillers in the amount of about 2 to about 80% wt of the chewing gum.

## Patentansprüche

1. Kaugummi, umfassend mindestens ein bioabbaubares Polymer und Kaugummi-Bestandteile,
wobei die Kaugummi-Bestandteile ausgewählt sind aus den Gruppen von weichmachenden Mitteln, Süßungsmitteln, Geschmacksmitteln, aktiven Bestandteilen, Füllstoffen, deren Mischungen und
wobei der Kaugummi weniger als 1,0 Gewichtsprozent Wasser des Kaugummis enthält,
wobei das mindestens eine bioabbaubare Polymer mindestens 5 % des Kaugummi-Polymers umfasst.

2. Kaugummi nach Anspruch 1, wobei der Kaugummi weniger als 0,75 Gewichtsprozent Wasser des Kaugummis enthält.

3. Kaugummi nach irgendeinem der Ansprüche 1-2, wobei der Kaugummi weniger als 0,2 Gewichtsprozent Wasser des Kaugummis enthält.

4. Kaugummi nach irgendeinem der Ansprüche 1-3, wobei das mindestens eine bioabbaubare Polymer ein Polyester-Polymer ist, das durch die Polymerisation eines oder mehrerer cyclischer Estern durch Ringöffnung erhalten wird, und wobei mindestens einer der cyclischen Ester ausgewählt ist aus den Gruppen von Glycoliden, Lactiden, Lactonen, cyclischen Carbonaten oder deren Mischungen.

5. Kaugummi nach irgendeinem der Ansprüche 1-4, wobei das mindestens eine bioabbaubare Polymer ein Polyester-Copolymer ist, das durch die Polymerisation von zwei oder mehr cyclischen Estern durch Ringöffnung erhalten wird, und wobei mindestens einer der cyclischen Ester ausgewählt ist aus den Gruppen von Glycoliden, Lactiden, Lactonen, cyclischen Carbonaten oder deren Mischungen.

6. Kaugummi nach irgendeinem der Ansprüche 1-5, wobei die rheologischen Eigenschaften des abbaubaren Polymers durch Einstellen der funktionalen Zahl an Initiator gesteuert wird.

7. Kaugummi nach irgendeinem der Ansprüche 1-6, wobei die Lacton-Monomere ausgewählt sind aus der Gruppe von ε-Caprolacton, δ-Valerolacton, γ-Butyrolacton und β-Propiolacton, und auch ε-Caprolactone, δ-Valerolactone, γ-Butyrolactone oder β-Propiolactone, die mit einem oder mehreren Alkyl- oder Aryl-Substituenten an irgendwelchen Nicht-Carbonylkohlenstoffatomen entlang des Rings substituiert sind, einschließlich Verbindungen, in denen zwei Substituenten am selben Kohlenstoffatom enthalten sind, und deren Mischungen eingeschlossen sind.

8. Kaugummi nach irgendeinem der Ansprüche 1-7, wobei das Carbonat-Monomer ausgewählt ist aus der Gruppe von Trimethylencarbonat, 5-Alkyl-1,3-dioxan-2-on, 5,5-Dialkyl-1,3-dioxan-2-on oder 5-Alkyl-5-alkyloxy-carbonyl-1,3-dioxan-2-on, Ethylencarbonat, 3-Ethyl-3-hydroxymethyl-propylencarbonat, Trimethylolpropanmonocarbonat, 4,6-Dimethyl-1,3-propylencarbonat, 2,2-Dimethyltrimethylencarbonat und 1,3-Dioxepan-2-on und deren Mischungen.

9. Kaugummi nach irgendeinem der Ansprüche 1-8, wobei der Kaugummi im Wesentlichen frei von Wasser ist, das Süßungsmittel oder weichmachende Mittel enthält.

10. Kaugummi nach irgendeinem der Ansprüche 1-9, wobei der Kaugummi mindestens ein wenig hygroskopisches weichmachendes Mittel oder Süßungsmittel umfasst.

11. Kaugummi nach irgendeinem der Ansprüche 1-10, wobei das mindestens eine wenig hygroskopische weichmachende Mittel oder der wenig hygroskopische Kaugummi pulverförmigen Erythrit umfasst.

12. Kaugummi nach irgendeinem der Ansprüche 1-11, wobei die Kaugummi-Bestandteile Geschmacksmittel umfassen.

13. Kaugummi nach irgendeinem der Ansprüche 1-12, wobei die Geschmacksmittel natürliche und synthetische Geschmacksstoffe in Form von natürlichen Pflanzenkomponenten, essentiellen Ölen, Essenzen, Extrakten, Pulvern umfassen, einschließlich Säuren und anderen Substanzen, die das Geschmacksprofil beeinflussen können.

14. Kaugummi nach irgendeinem der Ansprüche 1-13, wobei der Kaugummi Geschmacksstoff in einer Menge von 0,01 bis etwa 30 Gew,-% umfasst,
wobei der Prozentsatz auf das Gesamtgewicht des Kaugummis bezogen ist.

15. Kaugummi nach irgendeinem der Ansprüche 1-14, wobei der Kaugummi Geschmacksstoff in einer Menge von 0,2 bis etwa 4 Gew,-% umfasst,
wobei der Prozentsatz auf das Gesamtgewicht des Kaugummis bezogen ist.

16. Kaugummi nach irgendeinem der Ansprüche 1-15, wobei der Geschmacksstoff wasserlösliche Bestandteile umfasst.

17. Kaugummi nach irgendeinem der Ansprüche 1-16, wobei der wasserlösliche Geschmacksstoff Säuren umfasst.

18. Kaugummi nach irgendeinem der Ansprüche 1-17, wobei der Geschmacksstoff in Wasser unlösliche Bestandteile umfasst.

19. Kaugummi nach irgendeinem der Ansprüche 1-18, wobei die Kaugummi-Bestandteile Süßungsmittel umfassen.

20. Kaugummi nach irgendeinem der Ansprüche 1-19, wobei die Süßungsmittel Füllsüßstoffe umfassen.

21. Kaugummi nach irgendeinem der Ansprüche 1-20, wobei der Kaugummi Füllsüßstoffe in einer Menge von etwa 5 bis etwa 95 Gew -% des Kaugummis, typischer etwa 20 bis etwa 80 Gew -% des Kaugummis umfasst.

22. Kaugummi nach irgendeinem der Ansprüche 1-21, wobei die Süßungsmittel Hochintensitäts-Süßungsmittel umfassen.

23. Kaugummi nach irgendeinem der Ansprüche 1-22, wobei die Hochintensitäts-Süßungsmittel Sucralose, Aspartam, Salze von Acesulfam, Alitam, Saccharin und dessen Salze, Cyclamsäure und deren Salze, Glycyrrhizin, Dihydrochalcone, Thaumatin, Monellin, Steriosid allein oder in Kombination umfassen.

24. Kaugummi nach irgendeinem der Ansprüche 1-23, wobei der Kaugummi Hochintensitäts-Süßungmittel in einer Menge von etwa 0 bis etwa 1 Gew.-% des Kaugummis, typischer etwa 0,05 bis etwa 0,5 Gew.-% des Kaugummis umfasst.

25. Kaugummi nach irgendeinem der Ansprüche 1-24, wobei der Kaugummi mindestens ein weichmachendes Mittel umfasst.

26. Kaugummi nach irgendeinem der Ansprüche 1-25, wobei das mindestens eine weichmachende Mittel Talg, hydrierten Talg, hydrierte und partiell hydrierte Pflanzenöle, Kakaobutter, Glycerolmonostearat, Glyceroltriacetat, Lecithin, Mono-, Di- und Triglyceride, acetylierte Monoglyceride, Fettsäuren, wie Stearin-, Palmitin-, Öl- und Linolsäure, Wachse, PGE und deren Mischungen umfasst.

27. Kaugummi nach irgendeinem der Ansprüche 1-26, wobei der Kaugummi weichmachende Mittel in einer Menge von etwa 0 bis etwa 18 Gew.-% des Kaugummis, typischer etwa 0 bis etwa 12 Gew.-% des Kaugummis umfasst.

28. Kaugummi nach irgendeinem der Ansprüche 1-27, wobei die Kaugummi-Bestandteile aktive Bestandteile umfassen.

29. Kaugummi nach irgendeinem der Ansprüche 1-28, wobei die aktiven Bestandteile ausgewählt sind aus der Gruppe von: Acetaminophen, Acetylsalicylsäure, Buprenorphin, Bromhexin, Celcoxib, Codein, Diphenhydramin, Diclofenac, Etoricoxib, Ibuprofen, Indometacin, Ketoprofen, Lumiracoxib, Morphin, Naproxen, Oxycodon, Parecoxib, Peroxicam, Pseudoephedrin, Rofecoxib, Tenoxicam, Tramadol, Valdecoxib, Calciumcarbonat, Magaldrat, Disulfiram, Bupropion, Nikotin, Azithromycin, Clarithromycin, Clotrimazol, Erythromycin, Tetracyclin, Granisetron, Ondansetron, Prometazin, Tropisetron, Brompheniramin, Ceterizin, Levo-Ceterizin, Chlorcyclizin, Chlorpheniramin, Difenhydramin, Doxylamin, Fenofenadin, Guaifenesin, Loratidin, des-Loratidin, Phenyltoloxamin, Promethazin, Pyridamin, Terfenadin, Troxerutin, Methyldopa, Methylphenidat, Benzalkoniumchlorid, Benzethoniumchlorid, Cetylpyridiumchlorid, Chlorhexidin, Ecabet-Natrium, Haloperidol, Allopurinol, Colchinin, Theophyllin, Propanolol, Prednisolon, Prednison, Fluorid, Harnstoff, Miconazol, Actot, Glibenclamid, Glipizid, Metformin, Miglitol, Repaglinid, Rosiglitazon, Apomorphin, Cialis, Sildenafil, Vardenafil, Diphenoxylat, Simethicon, Cimetidin, Famotidin, Ranitidin, Cetrizin, Loratadin, Aspirin, Benzocain, Dextrometorphan, Ephedrin, Phenylpropanolamin, Pseudoephedrin, Cisaprid, Domperidon, Metoclopramid, Acyclovir, Dioctylsulfosuccinat, Phenolphthalein, Almotriptan, Eletriptan, Ergotamin, Migea, Naratriptan, Rizatriptan, Sumatriptan, Zolmitriptan, Aluminiumsalze, Calciumsalze, Eisensalze, Silbersalze, Zinksalze, Amphotericin B, Chlorhexidin, Miconazol, Triamcinolonacetonid, Melatonin, Phenobarbitol, Koffein, Benzodiazepine, Hydroxyzin, Meprobamat, Phenothiazin, Buclizin, Brometazin, Cinnarizin, Cyclizin, Difenhydramin, Dimenhydrinat, Buflomedil, Amphetamin, Koffein, Ephedrin, Orlistat, Phenylephedrin, Phenylpropanolamin, Pseudoephedrin, Sibutramin, Ketoconazol, Nitroglycerin, Nystatin, Progesteron, Testosteron, Vitamin B12, Vitamin C, Vitamin A, Vitamin D, Vitamin E, Pilocarbin, Aluminiumaminoacetat, Cimetidin, Esomeprazol, Famotidin, Lansoprazol, Magnesiumoxid, Nizatid und/oder Ratinidin oder Derivaten und Mischungen derselben.

30. Kaugummi nach irgendeinem der Ansprüche 1-29, wobei der Kaugummi im Wesentlichen frei von nicht-bioabbaubaren Polymeren ist.

31. Kaugummi nach irgendeinem der Ansprüche 1-30, wobei die mindestens zwei oder mehr cyclischen Ester ausgewählt sind aus den Gruppen von Glycoliden, Lactiden, Lactonen, cyclischen Carbonaten oder deren Mischungen.

32. Kaugummi nach irgendeinem der Ansprüche 1-31, wobei die Lacton-Monomere ausgewählt sind aus der Gruppe von ε-caprolacton, δ-Valerolacton, γ-Butyrolacton und β-Propiolacton., und auch ε-Caprolactone, δ-Valerolactone, γ-Butyrolactone oder β-Propiolactone eingeschlossen sind, die mit einem oder mehreren Alkyl- oder Aryl-Substituenten an irgendeinem Nicht-Carbonylkohlenstoff-Atom entlang des Rings substituiert worden sind, einschließlich Verbindungen, in denen zwei Substituenten am selben Kohlenstoffatom enthalten sind.

33. Kaugummi nach irgendeinem der Ansprüche 1-32, wobei das Carbonat-Monomer ausgewählt ist aus der Gruppe von Trimethylencarbonat, 5-Alkyl-1,3-dioxan-2-on, 5,5-Dialkyl-1,3-dioxan-2-on oder 5-Alkyl-5-alkyloxycar-bonyl-1,3-dioxan-2-on, Ethylencarbonat, 3-Ethyl-3-hydroxymethylpropylen-carbonat, Trimethylolpropanmonocarbonat, 4,6-Dimethyl-1,3-propylencarbonat, 2,2-Dimethyltrimethylencarbonat und 1,3-Dioxepan-2-on und deren Mischungen.

34. Kaugummi nach irgendeinem der Ansprüche 1-33, wobei cyclische Ester-Polymere und deren Copolymere, die aus der Polymerisation von cyclischen Ester-Monomeren resultieren, ohne Beschränkung umfassen: Poly(L-lactid); Poly(D-lactid); Poly(D,L-lactid); Poly(mesolactid); Poly(glycolid); Poly(trimethylencarbonat); Poly(epsilon-caprolacton); Poly(L-lactid-co-D,L-lactid); Poly(L-lactid-co-mesolactid); Poly(L-lactid-co-glycolid); Poly(L-lactid-co-trimethylencarbonat); Poly(L-lactid-co-epsilon-caprolacton); Poly(D,L-lactid-co-mesolactid); Poly(D,L-lactid-co-glycolid); Poly(D,L-lactid-co-trimethylencarbonat); Poly(D,L-lactid-co-epsilon-caprolacton); Poly-(mesolactid-co-glycolid); Poly(mesolactid-co-trimethylencarbonat); Poly-(mesolactid-co-epsilon-caprolacton); Poly(glycolid-co-trimethylencarbonat); Poly(glycolid-co-epsilon-caprolacton).

35. Kaugummi nach irgendeinem der Ansprüche 1-34, wobei der Kaugummi Füllstoffe umfasst.

36. Kaugummi nach irgendeinem der Ansprüche 1-35, wobei der Kaugummi Füllstoffe in einer Menge von etwa 0 bis etwa 50 Gew.-% des Kaugummis, typischer etwa 10 bis etwa 40 Gew.-% des Kaugummis umfasst.

37. Kaugummi nach irgendeinem der Ansprüche 1-36, wobei der Kaugummi mindestens ein Färbemittel umfasst.

38. Kaugummi nach irgendeinem der Ansprüche 1-37, wobei der Kaugummi mit einem äußeren Überzug beschichtet ist.

39. Kaugummi nach irgendeinem der Ansprüche 1-38, wobei der äußere Überzug ein harter Überzug ist.

40. Kaugummi nach irgendeinem der Ansprüche 1-39, wobei der harte Überzug ein Überzug ist, der ausgewählt ist aus der Gruppe bestehend aus einem Zuckerüberzug und einem zuckerfreien Überzug und einer Kombination derselben.

41. Kaugummi nach irgendeinem der Ansprüche 1-40, wobei der harte Überzug 50 bis 100 Gew.-% eines Polyols umfasst, das ausgewählt ist aus der Gruppe bestehend aus Sorbit, Maltit, Mannit, Xylit, Erythrit, Lactit und Isomalt.

42. Kaugummi nach irgendeinem der Ansprüche 1-41, wobei der äußere Überzug ein essbarer Film ist, der mindestens eine Komponente umfasst, die ausgewählt ist aus der Gruppe bestehend aus einem essbaren filmbildenden Mittel und einem Wachs.

43. Kaugummi nach irgendeinem der Ansprüche 1-42, wobei das filmbildende Mittel ausgewählt ist aus der Gruppe bestehend aus einem Cellulosederivat, einer modifizierten Stärke, einem Dextrin, Gelatine, Schellack, Gummi arabicum, Zein, einem Pflanzengummi, einem synthetischen Polymer und irgendeiner Kombination derselben.

44. Kaugummi nach irgendeinem der Ansprüche 1-43, wobei der äußere Überzug mindestens eine Zusatzkomponente umfasst, die ausgewählt ist aus der Gruppe bestehend aus einem Bindemittel, einer Feuchtigkeit absorbierenden Komponente, einem filmbildenden Mittel, einem Dispergiermittel, einer Antiklebrigkeits-Komponente, einem Volumen verleihenden Mittel, einem Geschmacksmittel, einem Färbemittel, einer pharmazeutisch oder kosmetisch aktiven Komponente, einer Lipid-Komponente, einer Wachskomponente, einem Zucker, einer Säure und einem Mittel, welches den Abbau des abbaubaren Polymers nach dem Kauen beschleunigen kann.

45. Kaugummi nach irgendeinem der Ansprüche 1-44, wobei der äußere Überzug ein weicher Überzug ist.

46. Kaugummi nach irgendeinem der Ansprüche 1-45, wobei der weiche Überzug ein zuckerfreies Beschichtungsmittel umfasst.

47. Kaugummi nach irgendeinem der Ansprüche 1-46, wobei der Kaugummi herkömmliche Kaugummi-Polymere oder-Harze umfasst.

48. Kaugummi nach irgendeinem der Ansprüche 1-47, wobei alle bioabbaubaren Polymere, die in dem Kaugummi enthalten sind, mindestens 25 %, bevorzugt mindestens 50 % der Kaugummi-Polymere umfassen.

49. Kaugummi nach irgendeinem der Ansprüche 1-48, wobei alle bioabbaubaren Polymere, die in dem Kaugummi enthalten sind, mindestens 80 %, bevorzugt mindestens 90 % der Kaugummi-Polymere umfassen.

50. Kaugummi nach irgendeinem der Ansprüche 1-49, wobei der Kaugummi umfasst
- mindestens ein bioabbaubares Polyester-Copolymer, das einen Weichmacher des Kaugummis bildet, und
- mindestens ein nicht-bioabbaubares herkömmliches Elastomer.

51. Kaugummi nach irgendeinem der Ansprüche 1-50, wobei der Kaugummi umfasst
- das mindestens eine bioabbaubare Polyester-Copolymer, das ein Elastomer des Kaugummis bildet, und
- mindestens ein nicht-bioabbaubares herkömmliches natürliches oder synthetisches Harz.

52. Kaugummi nach irgendeinem der Ansprüche 1-51, wobei der Kaugummi umfasst mindestens ein bioabbaubares Elastomer in einer Menge von etwa 0,5 bis etwa 70 Gew.-% des Kaugummis,
mindestens einen bioabbaubaren Weichmacher in einer Menge von 0,5 bis etwa 70 Gew.-% des Kaugummis und
mindestens einen Kaugummi-Bestandteil, der aus der Gruppe von weichmachenden Mitteln, Süßungsmitteln, Geschmacksmitteln, aktiven Bestandteilen und Füllstoffen ausgewählt ist, in einer Menge von etwa 2 bis etwa 80 Gew.-% des Kaugummis.

## Revendications

1. Chewing-gum comprenant au moins un polymère biodégradable et des ingrédients de chewing-gum,
lesdits ingrédients de chewing-gum étant choisis dans le groupe des ramollissants, édulcorants, agents aromatisants, ingrédients actifs, agents de remplissage et leurs mélanges et
ledit chewing-gum contenant moins de 1.0 % en poids d'eau du chewing-gum.
dans lequel l'au moins un polymère biodégradable comprend au moins 5 % des polymères du chewing-gum.

2. Chewing-gum selon la revendication 1, ledit chewing-gum contenant moins de 0,75 % en poids d'eau du chewing-gum.

3. Chewing-gum selon l'une quelconque des revendications 1 à 2, ledit chewing-gum contenant moins de 0,2 % en poids d'eau du chewing-gum.

4. Chewing-gum selon l'une quelconque des revendications 1 à 3,
dans lequel au moins un polymère biodégradable est un polymère polyester obtenu par polymérisation d'un ou de plusieurs esters cycliques par ouverture du cycle et dans lequel au moins l'un des esters cycliques est choisi dans le groupe des glycolides, lactides, lactones, carbonates cycliques ou des mélanges de ceux-ci.

5. Chewing-gum selon l'une quelconque des revendications 1 à 4,
dans lequel au moins un polymère biodégradable est un copolymère de polyester obtenu par polymérisation de deux ou plusieurs esters cycliques par ouverture du cycle et dans lequel au moins d'un des esters cycliques est choisi dans le groupe des glycolides, lactides, lactones, carbonates cycliques ou des mélanges de ceux-ci.

6. Chewing-gum selon l'une quelconque des revendications 1 à 5,
dans lequel les propriétés rhéologiques du polymère biodégradable sont contrôlées en ajustant le nombre fonctionnel d'initiateur.

7. Chewing-gum selon l'une quelconque des revendications 1 à 6,
dans lequel les monomères lactones sont choisis dans le groupe comprenant l'ε-caprolactone, le δ-valérolactone, et le β-propiolactone. Il comprend également les ε-caprolactone, δ-valérolactone, γ-butyrolactones ou β-propiolactones qui ont été substitués par un ou plusieurs substituants alkyle ou aryle au niveau de tout atome de carbone non carbonyle le long du cycle, comprenant les composés dans lesquels deux substituants sont contenus sur le même atome de carbone, et leurs mélanges.

8. Chewing-gum selon l'une quelconque des revendications 1 à 7,
dans lequel le monomère carbonate est choisi dans le groupe comprenant le triméthylène carbonate, le 5-alkyl-1,3-dioxan-2-one, le 5,5-dialkyl-1,3-dioxan-2-one ou le 5-alkyl-5-alkyloxycarbonyl-1,3-dioxan-2-one, l'éthylène-carbonate, le 3-éthyl-3-hydroxyméthyle, le propylène carbonate, le triméthylolpropane monocarbonate, le 4,6-diméthyl-1,3-propylène carbonate, le 2,2-diméthyl-triméthylène carbonate et le 1-3-dioxépan-2-one et leurs mélanges.

9. Chewing-gum selon l'une quelconque des revendications 1 à 8,
dans lequel le chewing-gum est sensiblement dépourvu d'édulcorants contenant de l'eau ou des ramollissants.

10. Chewing-gum selon l'une quelconque des revendications 1 à 9,
dans lequel le chewing-gum comprend au moins un ramollissant ou un édulcorant hygroscopique.

11. Chewing-gum selon l'une quelconque des revendications 1 à 10,
dans lequel au moins l'un des ramollissants faiblement hygroscopique ou le chewing-gum comprend de l'érithitol en poudre.

12. Chewing-gum selon l'une quelconque des revendications 1 à 11, dans lequel lesdits ingrédients de chewing-gum comprennent des agents aromatisants.

13. Chewing-gum selon l'une quelconque des revendications 1 à 12, dans lequel lesdits agents aromatisants comprennent des aromatisants naturels et synthétiques sous la forme de composants végétaux naturels, d'huiles essentielles, d'essences, d'extraits, de poudres, comprenant des acides et autres substances pouvant affecter le profil gustatif.

14. Chewing-gum selon l'une quelconque des revendications 1 à 13, dans lequel ledit chewing-gum comprend un arôme en une quantité de 0,01 à 30 % en poids, ledit pourcentage étant basé sur le poids total du chewing-gum.

15. Chewing-gum selon l'une quelconque des revendications 1 à 14, dans lequel ledit chewing-gum comprend un arôme en une quantité de 0,2 à environ 4 % en poids, ledit pourcentage étant basé sur le poids total du chewing-gum.

16. Chewing-gum selon l'une quelconque des revendications 1 à 15, dans lequel ledit arôme comprend des ingrédients solubles dans l'eau.

17. Chewing-gum selon l'une quelconque des revendications 1 à 16, dans lequel ledit arôme soluble dans l'eau comprend des acides.

18. Chewing-gum selon l'une quelconque des revendications 1 à 17, dans lequel ledit arôme comprend des ingrédients insolubles dans l'eau.

19. Chewing-gum selon l'une quelconque des revendications 1 à 18, dans lequel lesdits ingrédients de chewing-gum comprennent des édulcorants.

20. Chewing-gum selon l'une quelconque des revendications 1 à 19,
dans lequel ledit édulcorant comprend des édulcorants de charge.

21. Chewing-gum selon l'une quelconque des revendications 1 à 20,
dans lequel le chewing-gum comprend des édulcorants en vrac en une quantité de 5 à environ 95 % en poids du chewing-gum, plus généralement, de 20 à environ 80 % en poids du chewing-gum.

22. Chewing-gum selon l'une quelconque des revendications 1 à 21, dans lequel ledit édulcorant comprend des édulcorants de haute densité.

23. Chewing-gum selon l'une quelconque des revendications 1 à 22, dans lequel les édulcorants de haute densité comprennent le sucralose, l'aspartame, les sels d'acésulfame, l'alitame, la saccharine et ses sels, l'acide cyclamique et ses sels, la glycyrrhizine, les dihydrochalcones, la thaumatine, la monelline, le stérioside, seuls ou en combinaisons.

24. Chewing-gum selon l'une quelconque des revendications 1 à 23,
dans lequel le chewing-gum comprend des édulcorants de haute densité en une quantité d'environ 0 à environ 1 % en poids du chewing-gum, plus généralement, d'environ 0,05 à environ 0,5 % en poids du chewing-gum.

25. Chewing-gum selon l'une quelconque des revendications 1 à 24,
dans lequel le chewing-gum comprend au moins un ramollissant.

26. Chewing-gum selon l'une quelconque des revendications 1 à 25,
dans lequel au moins un ramollissant comprend le suif, le suif hydrogéné, les huiles végétales hydrogénées et partiellement hydrogénées, le beurre de cacao, le glycérol monostéarate, le glycérol triacétate, la lécithine, les mono-, di- et triglycérides, les monoglycérides acétylés, les acides gras tels que les acides stéarique, palmitique, oléique et linoléique, les cires, le PGE et leurs mélanges.

27. Chewing-gum selon l'une quelconque des revendications 1 à 26,
dans lequel le chewing-gum comprend des ramollissants en une quantité d'environ 0 à environ 18 % en poids du chewing-gum, plus généralement d'environ 0 à environ 12 % en poids du chewing-gum.

28. Chewing-gum selon l'une quelconque des revendications 1 à 27, dans lequel lesdits ingrédients de chewing-gum comprennent des ingrédients actifs.

29. Chewing-gum selon l'une quelconque des revendications 1 à 28, lesdits ingrédients actifs étant choisis dans le groupe comprenant: l'acétaminophène, l'acétylsalycylsyre, la buprénorphine, la bromhexine, le celcoxib, la codéine, la diphénhydramine, le diclofénac, l'étoricoxib, l'ibuprofène, l'indométacine, le cétoprofène, le lumiracoxib, la morphine, le naproxène, l'oxycodon, le parecoxib, le piroxicam, la pseudo-éfédrine, le rofecoxib, le tenoxicam, le tramadol, le valdecoxib, le carbonate de calcium, le magaldrate, le disulfiram, le bupropion, la nicotine, fazithromycine, la clarithromycine, le clotrimazole, l'érythromycine, la tétracycline, le granisétron, l'ondansétron, la prométazine, le tropisétron, la bromphénoramine, la cétérizine, la léco-cétérisine, la chlorocyclizine, la chlorophéniramine, la difénhydramine, la doxylamine, la fénofénadine, la guaifénésine, la loratidine, la desloratidine, la phényltoloxamine, la prométhazine, la pyridamine, la terfénadine, le troxérutine, la méthyldopa, le méthylphénidate, le chlorure de benzalconium, le chlorure de benzethium, le chlorure de cétylpyridium, la chlorhexidine, l'ecabetsodium, l'halopéridol, l'allopurinol, la colquinine, la théophylline, le propanolol, la prednisolone, le prednisone, les fluorures, l'urée, le miconazole, l'actot, le glibenclamide, le glipizide, la metformine, le miglitol, le répaglinide, la rosiglitazone, l'apomorphine, le cialis, le sildénafil, le vardénafil, le diphénoxylate, la siméthicone, la cimétidine, la famotidine, la ranitidine, la ratinidine, la cétrizine, la loratadine, l'aspirine, la benzocaïne, le dextrométorphan, l'éphédrine, la phénylpropanolamine, la pseudo-éphédrine, le cisapride, le dompéridone, le métoclopramid, l'acylcovir, le dioctylsulfoosucc., la phénolphtaléine, l'almotriptan, l'électriotan, l'ergotamine, le migea, le naratriptan, le rizatriptan, le sumatriptan, le zolmitriptan, les sels d'aluminium, les sels de calcium, les sels de fer, les sels d'argent, les sels de zinc, l'amphotéricine B, la chlorhexidine, le miconasole, le triamcinolonacétonide, la mélatonine, le phénobarbital, la caféine, les benzodiazépines, l'hydroxyzine, le méprobamate, la phénothiazine, le buclizine, la brométazine, la cinnarizine, la cyclizine, la difénhydramine, le dimenhydrinate, le buflomédil, l'amphétamine, la caféine, l'éphédrine, l'orlistat, la phényléphédrine, la phénylpropanolamine, la pseudoéphédrine, la sibutramine, le kétoconazole, la nitroglycérine, la nystatine, la progestérone, la testostérone, la vitamine B12, la vitamine C, la vitamine A, la vitamine D, la vitamine E, la pilocarpine, l'amino-acétate d'aluminium, la cimétidine, l'ésoméprazole, la famotidine, le lansoprazole, l'oxyde de magnésium, le nizatide et/ou la ratinidine ou leurs dérivés et mélanges.

30. Chewing-gum selon l'une quelconque des revendications 1 à 29, dans lequel le chewing-gum est sensiblement dépourvu de polymères non biodégradables.

31. Chewing-gum selon l'une quelconque des revendications 1 à 30, dans lequel au moins deux esters cycliques sont choisis dans les groupes des glycolides, lactides, lactones, carbonates cycliques ou leurs mélanges.

32. Chewing-gum selon l'une quelconque des revendications 1 à 31, dans lequel les monomères lactone sont choisis dans le groupe comprenant l'ε-caprolactone, le δ-valérolactone, le γ-butyrolactone et le β-propiolactone. Il comprend également les ε-caprolactones, δ-valérolactones, γ-butyrolactones ou β-propiolactones qui ont été substitués par un ou plusieurs substituants alkyle ou aryle au niveau de tout atome de carbone non carbonyle le long du cycle, comprenant les composés dans lesquels deux substituants sont contenus sur le même atome de carbone.

33. Chewing-gum selon l'une quelconque des revendications 1 à 32,
dans lequel le monomère carbonate est choisi dans le groupe comprenant le triméthylène carbonate, le 5-alkyl-1,3-dioxan-2-one, le 5,5-dialkyl-1,3-dioxan-2-one ou le 5-alkyl-5-alkyloxycarbonyl-1,3-dioxan-2-one, l'éthylène-carbonate, le 3-éthyl-3-hydroxyméthyle, le propylène carbonate, le triméthylolpropane monocarbonate, le 4,6-diméthyl-1,3-propylène carbonate, le 2,2-diméthyl-triméthylène carbonate et le 1-3-dioxépm-2-one et leurs mélanges.

34. Chewing-gum selon l'une quelconque des revendications 1 à 33,
dans lequel les polymères d'ester cyclique et leurs copolymères résultant de la polymérisation de monomères d'esters cycliques comprennent le poly (L-lactide) ; le poly (D-lactide) ; le poly (D,L-lactide) ; le poly (mésolactide) ; le poly (glycolide) ; le poly (triméthylène carbonate) ; le poly(epsilon-caprolactone) ; le poly(L-lactide co-D,L-lactide) ; le poly(L-lactide-co-meso-lactide) ; le poly(L-lactide-co-glycolide) ; le poly(L-lactide-co-triméthylène carbonate) ; le poly (L-lactide-co-epsilon-caprolactone) ; ; le poly(D,L-lactide-co-meso-lactide) ; le poly(D,L-lactide-co-glycolide) ; le poly(D,L-lactide-co-triméthylène carbonate) ; le poly(D,L-lactide-co-epsilon-caprolactone) ; le poly(meso-lactide-co-glycolide ; le poly(leso-lactide-co-triméthylène carbonate ; le poly(meso-lactide-co-epsilon-caprolactone ; le poly(glycolide-cotriméthylène carbonate) ; le poly(glycolide-co-epsilon-caprolactone).

35. Chewing-gum selon l'une quelconque des revendications 1 à 34,
dans lequel le chewing-gum comprend un agent de remplissage.

36. Chewing-gum selon l'une quelconque des revendications 1 à 35,
dans lequel le chewing-gum comprend un agent de remplissage en une quantité de 0 à environ 50 % en poids du chewing-gum, plus généralement, de 10 à environ 40 % en poids du chewing-gum.

37. Chewing-gum selon l'une quelconque des revendications 1 à 36, ledit chewing-gum comprenant au moins un agent colorant.

38. Chewing-gum selon l'une quelconque des revendications 1 à 37, dans lequel le chewing-gum est enrobé d'un enrobage extérieur.

39. Chewing-gum selon l'une quelconque des revendications 1 à 38, dans lequel l'enrobage extérieur est un enrobage dur.

40. Chewing-gum selon l'une quelconque des revendications 1 à 39, dans lequel l'enrobage dur est un enrobage choisi dans le groupe comprenant un enrobage de sucre et un enrobage sans sucre et une combinaison de ceux-ci

41. Chewing-gum selon l'une quelconque des revendications 1 à 40, dans lequel l'enrobage dur comprend 50 à 100 % en poids d'un polyol choisi dans le groupe comprenant le sorbitol, le mannitol, le xylitol, l'érythritol, le lactitol et l'isomalt.

42. Chewing-gum selon l'une quelconque des revendications 1 à 41, dans lequel l'enrobage extérieur est un film comestible comprenant au moins un composant choisi dans le groupe comprenant un agent filmogène comestible et une cire.

43. Chewing-gum selon l'une quelconque des revendications 1 à 42, dans lequel l'agent filmogène est choisi dans le groupe comprenant un dérivé de cellulose, un amidon modifié, une dextrine, une gélatine, une gomme laque, une gomme arabique, une gomme végétale, un polymère synthétique et une combinaison de ceux-ci.

44. Chewing-gum selon l'une quelconque des revendications 1 à 43, dans lequel l'enrobage externe comprend au moins un composant additif choisi dans le groupe comprenant un agent liant, un composant absorbant l'humidité, un agent filmogène, un agent dispersant, un composant anti-agglomérant, un agent diluant, un agent aromatisant, un agent colorant, un composant pharmaceutiquement ou cosmétiquement actif, un composant lipidique, un composant de cire, un acide et un agent pouvant accélérer la dégradation après mastication du polymère dégradable.

45. Chewing-gum selon l'une quelconque des revendications 1 à 44, dans lequel l'enrobage externe est un enrobage souple.

46. Chewing-gum selon l'une quelconque des revendications 1 à 45, dans lequel l'enrobage souple comprend un agent d'enrobage sans sucre.

47. Chewing-gum selon l'une quelconque des revendications 1 à 46,
dans lequel ledit chewing-gum comprend des polymères ou résines de chewing-gum classiques.

48. Chewing-gum selon l'une quelconque des revendications 1 à 47,
dans lequel tous les polymères biodégradables compris dans le chewing-gum comprennent au moins 25 %, de préférence au moins 50 % des polymères du chewing-gum.

49. Chewing-gum selon l'une quelconque des revendications 1 à 48,
dans lequel tous les polymères biodégradables compris dans le chewing-gum comprennent au moins 80 %, de préférence au moins 90 % des polymères du chewing-gum.

50. Chewing-gum selon l'une quelconque des revendications 1 à 49,
dans lequel ledit chewing-gum comprend
- au moins un copolymère de polyester biodégradable formant un plastifiant du chewing-gum et
- au moins un élastomère classique non biodégradable.

51. Chewing-gum selon l'une quelconque des revendications 1 à 50,
dans lequel ledit chewing-gum comprend
- au moins un copolymère de polyester biodégradable formant un élastomère du chewing-gum et
- au moins une résine naturelle ou synthétique classique non biodégradable.

52. Chewing-gum selon l'une quelconque des revendications 1 à 51,
dans lequel ledit chewing-gum comprend
- au moins un élastomère biodégradable en une quantité d'environ 0,5 à environ 70 % en poids du chewing-gum
- au moins un plastifiant biodégradable en une quantité d'environ 0,5 à environ 70 % en poids du chewing-gum et
- au moins un ingrédient de chewing-gum choisi dans les groupes des ramollissants, édulcorants, agents aromatisants, ingrédients actifs et agents de remplissage en une quantité de 2 à environ 80 % en poids du chewing-gum.
